# EUROPÄISCHE PATENTSCHRIFT

(11) **EP 2 913 594 B1**
(45) Veröffentlichungstag und Bekanntmachung des Hinweises auf die Patenterteilung: **27.12.2017**
(21) Anmeldenummer: 15154643.9
(22) Anmeldetag: 11.02.2015
(51) Int. Cl.: F24D 19/10, F24D 3/02, G05D 23/19

(54) **Verfahren zum Betreiben einer pufferspeicherlosen Heizungsanlage, insbesondere zur Gewährleistung eines sicheren und einwandfreien Betriebs**
Method for operating a heating system with no buffer storage, in particular for guaranteeing safe and correct operation
Procédé de fonctionnement d'une installation de chauffage sans ballon tampon, en particulier destiné à garantir un fonctionnement fiable et correct

(30) Priorität: 28.02.2014 DE 102014203760
(43) Veröffentlichungstag der Anmeldung: 02.09.2015
(73) Patentinhaber: ROBERT BOSCH GMBH, 70442 Stuttgart (DE)
(72) Erfinder: Holtz, Gerald, 70174 Stuttgart (DE)

(56) Entgegenhaltungen:
- EP-A1- 0 864 955
- EP-A2- 0 282 886
- DE-A1-102012 208 994

## Beschreibung

Die Erfindung betrifft ein Verfahren zum Betreiben einer pufferspeicherlosen Heizungsanlage mit mindestens einem Wärmeerzeuger, mindestens einem Wärmeverbraucher und mindestens einem Ventil nach dem Oberbegriff des Anspruchs 1, wobei der Wärmeerzeuger, der Wärmeverbraucher und das Ventil miteinander verbunden sind und miteinander kommunizieren und von einem Fluid durchströmt werden, wobei das Fluid als Puffervolumen dient, wobei durch die Ansteuerung des Ventils das Puffervolumen geregelt und/oder gesteuert wird. Die Erfindung betrifft auch eine pufferspeicherlose Heizungsanlage, in welcher das Verfahren läuft, sowie eine Regel- und/oder Steuereinheit, in welcher das Verfahren läuft.

### Stand der Technik

Aus der EP 2199692 ist eine kompakte Heizzentrale mit einer Wärmepumpe ohne Pufferspeicher bekannt. Jedoch weist deren Heizzentrale einen Anschluss für einen Pufferspeicher auf, und es wird nicht angegeben, wie eine Heizungsanlage mit dieser Heizzentrale ohne Pufferspeicher sicher und einwandfrei betrieben werden kann.

Aus der DE 10 2012 208 994 A1 ist eine pufferspeicherlose Heizungsanlage mit einer Wärmequelle zum Erwärmen eines Wärmeträger-Fluids, mit einer Wärmesenke sowie mit einem Durchflussregelventil bekannt. Mittels Sensoren werden eine Vorlauf- und/oder Rücklauftemperatur des Heizkreislaufs sowie eine Außentemperatur erfasst und an eine Steuerungs- und Regelungseinheit zu einer Steuerung und/oder Regelung der Wärmequelle und/oder des Durchflussregelventils übermittelt. Hierdurch wird das im Heizkreislauf zirkulierende Fluidvolumen und/oder die im Fluid enthaltene Wärmemenge zu einer Erreichung und/oder Einhaltung einer Zieltemperatur gesteuert. Die Lehre dieser Druckschrift hat jedoch kein Verfahren zum Betreiben der Heizungsanlage, das einen sicheren und störungsfreien Betrieb der Heizungsanlage gewährleistet, als Schwerpunkt.

### Offenbarung der Erfindung

Dies wird durch das erfindungsgemäße Verfahren zum Betreiben einer pufferspeicherlosen Heizungsanlage mit mindestens einem Wärmeerzeuger, mindestens einem Wärmeverbraucher und mindestens einem Ventil gemäß den Merkmalen des Hauptanspruchs bewerkstelligt, wobei der Wärmeerzeuger, der Wärmeverbraucher und das Ventil miteinander verbunden sind und miteinander kommunizieren und von einem Fluid durchströmt werden, wobei das Fluid als

Puffervolumen dient, wobei durch die Ansteuerung des Ventils das Puffervolumen geregelt und/oder gesteuert wird, wobei das Puffervolumen vorgegeben wird, wobei zu jeder Puffervolumenanforderung ein bestimmter Volumenstrom und/oder eine Laufzeit benötigt und berechnet werden/wird oder anderweitig vorgegeben werden/wird, wobei in Abhängigkeit des Volumenstroms und/oder der Laufzeit eine Größe einer Durchflussöffnung des Ventils bestimmt wird, wobei für eine Einhaltung eines Mindestvolumenstroms berechnet wird, wie groß eine Durchflussöffnung des Ventils sein muss, damit der Mindestvolumenstrom zirkulieren kann, wobei nach Erreichen des vorgegebenen Puffervolumens und des Mindestvolumenstroms eine Einzelraumregelung für jedes Ventil gestartet wird.
Ein Fluid ist hier definiert als eine fließfähige Substanz, welche Wärme aufnehmen, speichern und abgeben kann, wie ein Gas oder eine Flüssigkeit. Grundsätzlich denkbar sind auch feste Stoffe, die Wärme speichern und abgeben können. Wenn hier die Bezeichnung Fluid verwendet wird, so sind Wärme übertragende Medien im allgemeinen gemeint, die in einer Heizungsanlage Einsatz finden können.
Unter einem Wärmeerzeuger werden hier Heizgeräte verstanden, die Wärme auf unterschiedliche Art und Weise generieren, beispielsweise durch Verbrennung fossiler Stoffe, wie bei einem Gas-oder Ölbrenner, oder unter Verwendung erneuerbarer Energien, wie bei einer Solaranlage oder Wärmepumpe.
Ein Wärmeverbraucher stellt eine Komponente einer Heizungsanlage dar, die die vom Wärmeerzeuger erzeugte Wärme an die Umgebung überträgt, beispielsweise zur Erwärmung eines Raumes oder eines Fluids.
Eine pufferspeicherlose Heizungsanlage ist definiert als eine Heizungsanlage ohne einen Pufferspeicher. Ebenso kann die Heizungsanlage ohne eine hydraulische Weiche betrieben werden.
Ein Puffervolumen ist definiert als das im Heizkreis befindliche Volumen und als das zusätzliche Heizwasser, das zur Verfügung steht, wenn vorher geschlossene Heizkreise geöffnet werden. Damit ist ebenfalls gemeint, dass das Wasser eine Funktion als Wärmemengenpuffer erfüllt, das heißt, dass das Wasser die Möglichkeit hat, Wärme aufzunehmen und Wärme abzugeben.

Bei der Verbindung zwischen dem Wärmeerzeuger, dem Wärmeverbraucher und dem Ventil handelt es sich zum einen um eine hydraulische Verbindung und Kommunikation, zum anderen um eine elektronische Verbindung und Kommunikation, welche auch als eine regelungstechnische Verbindung bezeichnet wird.

Durch die in den Unteransprüchen aufgeführten Merkmale sind vorteilhafte Weiterbildungen des erfindungsgemäßen Verfahrens zum Betreiben einer pufferspeicherlosen Heizungsanlage nach dem Hauptanspruch möglich.

Bei einem Verfahrensschritt kann bei einer zusätzlich eingespeisten Wärmemenge das mindestens eine Ventil zur Vergrößerung des geregelten Puffervolumens zumindest teilweise soweit geöffnet werden, bis das zusätzlich benötigte Puffervolumen bereitgestellt ist. Durch ein teilweises Öffnen steht zwar prinzipiell das gesamte Volumen dieses Heizkreises zur Verfügung, es kann aber aufgrund der verringerten Strömung nur ein Teil der gesamten Wärmekapazität des Volumens genutzt werden.

Ebenso kann bei einer Drosselung der einzuspeisenden Wärmemenge das mindestens eine Ventil zur Verkleinerung des geregelten Puffervolumens zumindest teilweise soweit geschlossen, bis das tatsächlich benötigte Puffervolumen bzw. dessen Wärmekapazität eingestellt ist.

Der Vorteil hiervon liegt darin, dass die Heizungsanlage den Erfordernissen und dem Bedarf entsprechend flexibel reagieren und geregelt werden kann, wobei auf einen zusätzlichen Pufferspeicher verzichtet werden kann. Weiter ist hierdurch der sichere und einwandfreie Betrieb der pufferspeicherlosen Heizungsanlage gewährleistet.

Wenn mehrere Ventile zur Einstellung des Puffervolumens herangezogen werden können, hat dies den Vorteil, dass alle vorhandenen Ventile und deren Zusammenspiel zur Einstellung des Puffervolumens verwendet werden. Dabei weist jedes Ventil einen aktuellen Ansteuergrad auf, und es wird zumindest das Ventil angesteuert, dessen aktueller Ansteuergrad sich nahe einer Schaltschwelle zum Öffnen oder Schließen befindet.

Dabei ist es auch vorteilhaft, wenn bei der Heranziehung zur Einstellung des Puffervolumens mehrerer Ventile jedes Ventil ein bestimmtes Puffervolumen mit einer bestimmten Größe steuern oder regeln kann, wobei zumindest das Ventil angesteuert werden kann, dessen Puffervolumen als Zusatz oder Verminderung benötigt wird.

In einem Verfahrensschritt kann das zusätzlich benötigte Puffervolumen aus einer zusätzlich bereitgestellten Wärmemenge und der maximal gewünschten oder erlaubten Temperaturerhöhung beim Wärmeverbraucher berechnet werden. Dadurch kann für eine optimierte Regelung und/oder Steuerung ein exakter Wert für das benötigte Puffervolumen zur Verfügung gestellt werden, was letzten Endes zu einem erhöhten Komfort für den Anwender und zu Energieeinsparungen führt.

Analog hierzu ist es von Vorteil, wenn das zu vermindernde Puffervolumen aus einer verminderten Wärmemenge und der maximal gewünschten oder erlaubten Temperaturerniedrigung beim Wärmeverbraucher berechnet werden kann.

Es ist von Vorteil, wenn ein Volumenstromsensor bereitgestellt werden kann, dessen Messsignal zur Berechnung der Puffervolumina herangezogen werden kann. Ein solches Messsignal spiegelt die vorhandenen Volumenströme wieder, so dass schnell bestimmt werden kann, welches Puffervolumen im Moment benötigt wird, um die gestellten Erfordernisse an den Wärmeverbraucher zu erfüllen. Dies kann zu einem optimalen Ablauf und mehr Komfort für den Anwender führen, was zugleich Energie- und andere Kosteneinsparungen bedeuten kann.

Die im Puffervolumen enthaltene Wärmemenge kann verwendet werden, um den Wärmeerzeuger zu beeinflussen. Insbesondere kann sie verwendet werden, um eine Wärmepumpe abzutauen. Dies hat den Vorteil, dass der sichere und einwandfreie Betrieb der Wärmepumpe gewährleistet werden kann.

Die Erfindung betrifft auch eine pufferspeicherlose Heizungsanlage mit mindestens einem Wärmeerzeuger, mit mindestens einem Wärmeverbraucher und mit mindestens einem Ventil, die miteinander verbunden sind und miteinander kommunizieren und die von einem Fluid durchströmt werden. Die pufferspeicherlose Heizungsanlage ist dadurch gekennzeichnet, dass das Fluid als Puffervolumen dient, wobei durch die Ansteuerung des mindestens einen Ventils nach einem Verfahren das Puffervolumen regelbar und/oder steuerbar ist, wobei es sich bei dem Wärmeerzeuger um eine Wärmepumpe der Heizungsanlage handelt, wobei über eine im Puffervolumen enthaltene Wärmemenge die Wärmepumpe abgetaut wird.

In diesem Zusammenhang ist es von Vorteil, wenn die pufferspeicherlose Heizungsanlage den Volumenstromsensor, insbesondere einen

Wasservolumenstromsensor, aufweist, wobei der Volumenstromsensor mit dem Wärmeerzeuger, mit dem Wärmeverbraucher und/oder dem Ventil verbunden sein kann und diese miteinander kommunizieren können.

Die Erfindung betrifft weiter eine Regel- und/oder Steuereinheit in einer Heizungsanlage mit mindestens einem Wärmeerzeuger, mindestens einem Wärmeverbraucher und mindestens einem Ventil, die miteinander verbunden sind und miteinander kommunizieren und die von einem Fluid durchströmt werden. Dabei läuft das oben geschilderte Verfahren zur Regelung und/oder Steuerung des Puffervolumens durch das Ventil in der Regel- und/oder Steuereinheit.

### Zeichnung

In den Figuren ist eine schematische Darstellung einer erfindungsgemäßen Heizungsanlage zu sehen, sowie ein Verfahren zum Betreiben der Heizungsanlage, welches in der folgenden Beschreibung näher dargelegt wird. Es zeigen
Figur 1 eine Heizungsanlage mit einem Pufferspeicher,
Figur 2 ein erstes Ausführungsbeispiel einer pufferspeicherlosen Heizungsanlage,
Figur 3 ein zweites Ausführungsbeispiel einer pufferspeicherlosen Heizungsanlage,
Figur 4 ein drittes Ausführungsbeispiel einer pufferspeicherlosen Heizungsanlage,
Figur 5 die prinzipiellen Schritte des Verfahrens zum Betreiben einer pufferspeicherlosen Heizungsanlage.

### Beschreibung der Zeichnungen

In den Figuren sind unterschiedliche Heizungsanlagen dargestellt, wobei gleichen Baukomponenten gleiche Bezugszahlen zugeordnet sind.

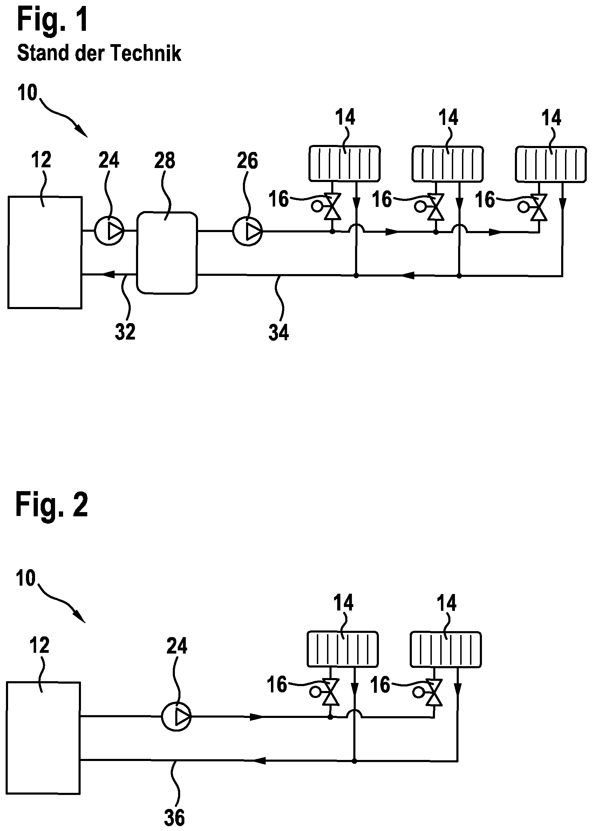

Figur 1 zeigt eine Heizungsanlage 10 mit einem Wärmeerzeuger 12, einem Pufferspeicher 28 und mehreren Wärmeverbrauchern 14, in deren Vorlauf mehrere Ventile 16 angebracht sind. Wärmeerzeuger 12, Wärmeverbraucher 14, Ventile 16 und Pufferspeicher 28 sind hydraulisch miteinander verbunden, wobei der Wärmeerzeuger 12 und Pufferspeicher 28 sich in einem ersten Teilheizkreis 32, die Wärmeverbraucher 14, der Pufferspeicher 28 und die Ventile 16 sich in einem zweiten Teilheizkreis 34 befinden. Vor dem Pufferspeicher 28 befindet sich eine erste Pumpe 24, dahinter eine zweite Pumpe 26. Die Heizungsanlage 10 kann auch mehrere Wärmeerzeuger 12 und/oder mehrere Pufferspeicher 28 umfassen.

Das erste Ausführungsbeispiel in Figur 2 zeigt eine Heizungsanlage 10 wie in Figur 1, jedoch ohne Pufferspeicher 28 und ohne hydraulische Weiche. Daher wird die Heizungsanlage 10 als pufferspeicherlose Heizungsanlage 10 bezeichnet.

Durch das Fehlen des Pufferspeichers 28 wird auch das Vorhandensein der zweiten Pumpe 26 unnötig. Der erste und zweite Teilheizkreis 32, 34 fallen zu einem Heizkreis 36 zusammen.

Dargestellt sind zwei Wärmeverbraucher 14 mit Ventilen 16, um zu betonen, dass die Anzahl der Wärmeverbraucher 14, der Wärmeerzeuger 12 und der Ventile 16 variieren kann.

Die Ventile 16 sind als elektronische Ventile ausgebildet, die geregelt und/oder gesteuert werden können. Ihr Verschlussteil zum Verschließen der Durchflussöffnung wird beispielsweise von einem Motor bewegt, welcher ansteuerbar ist. Über ein Signal wird ein Ventil 16 teilweise oder ganz geöffnet oder geschlossen.

Für den Betrieb der Heizungsanlage 10 müssen im allgemeinen verschiedene Werte vorgegeben oder berechnet werden, welche von der Art und Beschaffenheit der Heizungsanlage 10 und der Umgebung, in welcher sie installiert ist, abhängen. Unter anderem handelt es sich um Daten mit Informationen über die Heizungsanlage 10 und deren Auslegung, beispielsweise die Anzahl der vorhandenen Wärmeerzeuger 12, Wärmeverbraucher 14 und Ventile 16, das Volumen jedes Wärmeverbrauchers 14, die vorhandene Isolierung des Gebäudes und/oder der Fenster, die Größe der zu beheizenden Fläche und vieles mehr. Weiter handelt es sich um die Eingabe von Parametern für die Heizungsanlage 10, wie beispielsweise Durchschnittswerte und/oder Sollwerte als Richtwerte, und um Werte für den Betrieb der Heizungsanlage 10, wie ein Wert für einen Volumenstrom, ein Wert für eine Laufzeit des Wärmeerzeugers 12, insbesondere eine Mindestlaufzeit, und/oder ein Wert für die gewünschte Wärmeabgabe des Wärmeerzeugers 12. Auch ein Wert für das Puffervolumen wird vorgegeben. Es wird ein bestimmter Volumenstrom und/oder eine Laufzeit benötigt, welche zu jeder Puffervolumenanforderung berechnet oder anderweitig vorgegeben werden. In Abhängigkeit dieser Werte wird die Größe der Durchflussöffnungen der Ventile 16 bestimmt. Wird beispielsweise ein Maximalvolumenstrom angefordert, so werden die Ventile 16 voll geöffnet.

In vielen Heizungsanlagen muss ein Mindestvolumenstrom gewährleistet sein, damit es nicht zu Ausfällen oder Schäden kommt. Dieser Wert wird oft bei der Installation der Heizungsanlage 10 voreingestellt.

Wie in Figur 2 zu sehen ist, sind der Wärmeerzeuger 12, die Wärmeverbraucher 14 und die Ventile 16 miteinander verbunden und können miteinander kommunizieren. Weitere Verbindungen können zu weiteren Komponenten der Heizungsanlage 10 bestehen, wie zum Beispiel zur Pumpe 24. Zum einen handelt es sich um eine hydraulische Verbindung über den Heizkreis 36. Zum anderen liegt eine elektronische, kabelgebundene oder kabellose Verbindung zur Übertragung von Signalen und/oder Daten vor, über welche auch regelungstechnische Signale und Befehle geleitet werden können. Auch Mischverbindungen sind möglich.

Als Puffervolumen dient das Fluid, stellvertretend für den Pufferspeicher 28, welches im Heizkreis 36 durch den Wärmeerzeuger 12, durch die Ventile 16 und durch den Wärmeverbraucher 14 zirkuliert.

Die Ventile 16 an den Wärmeverbrauchern 14 schließen, sobald eine Sollwerttemperatur für den Wärmeverbraucher 14 erreicht ist. Ohne Pufferspeicher 28 oder hydraulische Weiche würde dann kein Fluid im Heizkreis 36 durch den Wärmeerzeuger 12, durch die Ventile 16 und/oder durch den Wärmeverbraucher 14 zirkulieren. Tritt dieser Fall in der pufferspeicherlosen Heizungsanlage 10 ein, so wird ein entsprechendes Signal an die Ventile 16 gesendet, wodurch ein oder mehr Ventile 16 teilweise oder ganz geöffnet werden, um einen Volumenstrom zu ermöglichen. Dabei wird die Größe der Durchflussöffnungen der Ventile 16 in Abhängigkeit der vorgegebenen Werte bestimmt, wie beispielsweise der Volumenstrom, die Laufzeit, die Wärmeabgabe oder ein gewünschtes Puffervolumen selbst. Es wird für die Einhaltung eines Mindestvolumenstroms berechnet, wie groß die Durchflussöffnung eines jeden Ventils 16 sein muss, damit dieser zirkulieren kann. Liegen beispielsweise zwei Wärmeverbraucher 14 mit einem Volumen von jeweils 12 Litern vor und wird ein Puffervolumen von 18 Litern gewünscht, so werden die Ventile 16 so eingestellt, dass sie zusammen zu 75% geöffnet sind. So kann ein Ventil 16 beispielsweise zu 25% geöffnet sein, das andere zu 50%. Oder sie werden zu gleichen Teilen geöffnet. Durch die Regelung und/oder Steuerung der Ventile 16 werden der Wärmeerzeuger 12 und die Wärmeverbraucher 14 also zum einen hydraulisch voneinander entkoppelt, zum anderen wird die Zirkulation eines Puffervolumens, insbesondere eines Mindestvolumenstroms, zu jeder Zeit ermöglicht.

Beispielsweise kann es sich bei dem Wärmeerzeuger 12 um eine Wärmepumpe, insbesondere um eine Luft-Wasser-Wärmepumpe, handeln. Durch das Verfahren zum Betreiben der pufferspeicherlosen Heizungsanlage 10 kann das Puffervolumen zum Abtauen der Wärmepumpe eingesetzt werden. So kann ein Mindestwasservolumenstrom zu allen Zeiten gewährleistet und nach Bedarf eingesetzt werden.

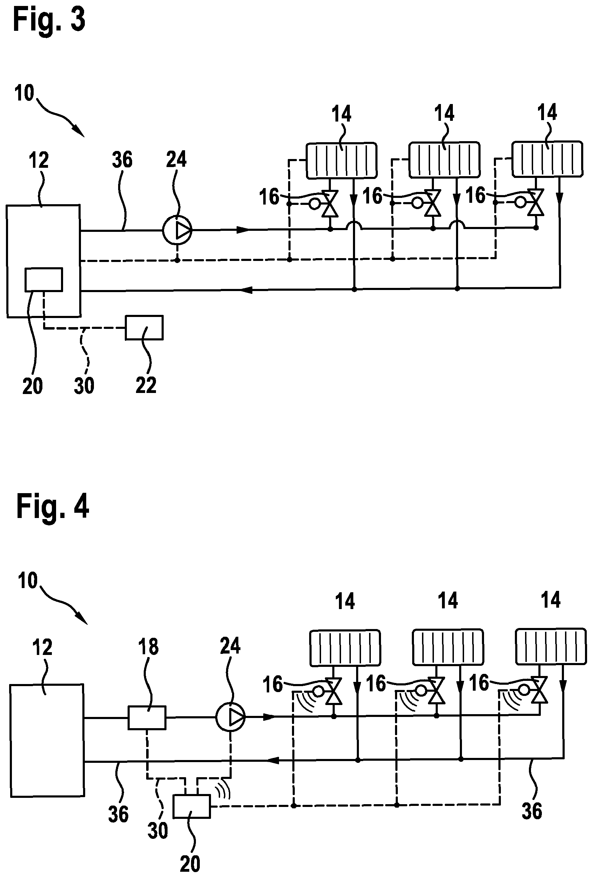

Das zweite Ausführungsbeispiel in Figur 3 unterscheidet sich zum ersten Ausführungsbeispiel in Figur 2 darin, dass drei Wärmeverbraucher 14 mit Ventilen 16 vorhanden sind und die pufferspeicherlose Heizungsanlage eine Regel- und/oder Steuereinheit 20 und eine Bedieneinheit 22 aufweist. Im Ausführungsbeispiel befindet sich die Regel- und/oder Steuereinheit 20 innerhalb und die Bedieneinheit 22 außerhalb des Wärmeerzeugers 12.

Die Regel- und/oder Steuereinheit 20 ist elektronisch über die Daten- und/oder Signalübertragung 30 mit dem Wärmeerzeuger 12, den Wärmeverbrauchern 14, den Ventilen 16 und der Bedieneinheit 22 verbunden. Elektronische Verbindungen können auch zu anderen Komponenten der Heizungsanlage 10 bestehen, so zur Pumpe 24 beispielsweise.

Im dritten Ausführungsbeispiel in Figur 4 befindet sich die Regel- und/oder Steuereinheit 20 außerhalb des Wärmeerzeugers 12, wobei in diesem Fall keine direkte Daten- und/oder Signalverbindung 30 zwischen dem Wärmeerzeuger 12, den Wärmeverbrauchern 14 und den Ventilen 16 besteht. Die pufferspeicherlose Heizungsanlage 10 weist einen Volumenstromsensor 18 auf, der sich im Vorlauf des Heizkreises 36 befindet. Der Volumenstromsensor 18, die Wärmeverbraucher 14, die Ventile 16 sowie weitere Komponenten des Heizkreises, wie die Pumpe 24, sind mit der Regel- und/oder Steuereinheit 20 elektronisch verbunden. Der Volumenstromsensor 18 und der Wärmeerzeuger 12 sind über den Heizkreis 36 miteinander verbunden.

Der Volumenstromsensor 18 kann so ausgebildet sein, dass eine kabellose Kommunikation möglich ist.

Der Volumenstromsensor 18 kann alternativ auch im Rücklauf des Heizkreises 36 angeordnet sein.

Über den Volumenstromsensor 18 wird ein Ist-Wert des Volumenstroms im Heizkreis 36 ermittelt, welcher an die Regel- und/oder Steuereinheit 20, an den Wärmeerzeuger 12, die Wärmeverbraucher 14 und/oder die Ventile 16 übermittelt wird. So kann direkt überprüft werden, ob der Wert für den Volumenstrom und/oder das Puffervolumen erreicht und/oder eingehalten wird. Das Verfahren zum Betreiben einer pufferspeicherlosen Heizungsanlage 10, insbesondere zur Gewährleistung eines sicheren und einwandfreien Betriebs, ist also unabhängig von der bestimmten technischen Ausgestaltung des Wärmeerzeugers 12 oder anderer Komponenten der Heizungsanlage 10.

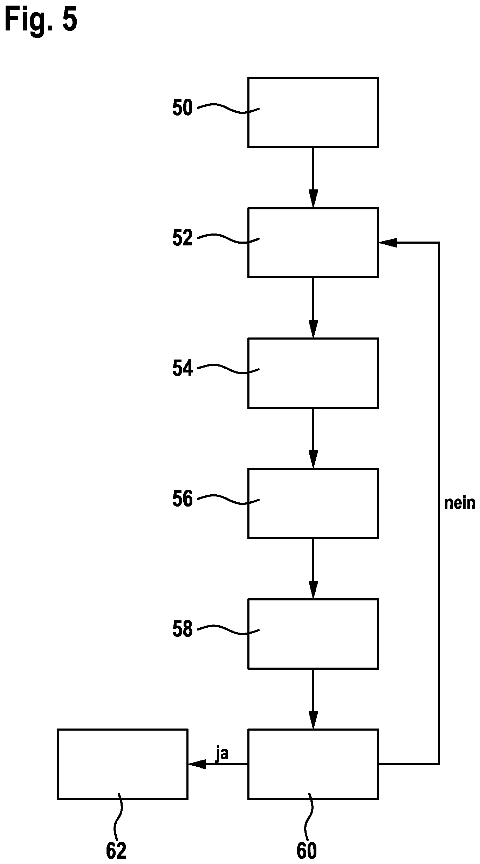

Der prinzipielle Ablauf des Verfahrens zum sicheren und einwandfreien Betreiben der pufferspeicherlosen Heizungsanlage 10 wird anhand Figur 5 näher beschrieben. Anhand einiger Ausführungsbeispiele wird das Prinzip weiter verdeutlicht.

Zu Beginn werden in Schritt 50 die gewünschten Einstellungen für die Heizungsanlage 10 bereitgestellt. Unter anderem handelt es sich um Parameter für die Heizungsanlage 10, wie beispielsweise Durchschnittswerte und/oder Sollwerte für den Betrieb der Heizungsanlage 10 als Richtwerte, um Daten mit Informationen über die Heizungsanlage 10, beispielsweise die Anzahl der Wärmeerzeuger 12, der Wärmeverbraucher 14 und der Ventile 16 und das Volumen jedes Wärmeverbrauchers 14, und um Werte für den Betrieb der Heizungsanlage 10. So können ein Wert für den Volumenstrom, insbesondere für den Mindestvolumenstrom, ein Wert für die Laufzeit des Wärmeerzeugers 12, insbesondere eine Mindestlaufzeit, und/oder ein Wert für die Wärmeabgabe des Wärmeerzeugers 12 und ein Wert für das Puffervolumen vorgegeben werden.

Ist die Regel- und/oder Steuereinheit 20 vorhanden, so liegen die Parameter, Daten oder Werte in dieser vor. Alternativ können die Parameter, Daten oder Werte auch per Hand eingegeben werden. Weist die Heizungsanlage 10 beispielsweise die Bedieneinheit 22 auf, so kann über diese die Eingabe erfolgen. Über die Daten-und/oder Signalverbindung 30 werden diese dann an die Regel- und/oder Steuereinheit 20 gesendet.

Signale oder Daten werden über die Daten-und/oder Signalverbindung 30 unter anderem an den Wärmeerzeuger 12, den Wärmeverbraucher 14 und die Ventile 16 geleitet.

Die Regel- und/oder Steuereinheit 20 speichert die Einstellungen und nutzt sie zur Regelung und/oder Steuerung der Heizungsanlage 10, insbesondere auch der Ventile 16.

Das Verfahren läuft unter anderem abhängig von den gemachten Einstellungen, insbesondere davon, ob ein Volumenstrom, eine Laufzeit und/oder eine Wärmeabgabe und ein Puffervolumen vorgegeben sind. Ausführungsbeispiele werden weiter unten näher erläutert. In allen Fällen wird bestimmt, welche Ventile 16 wie weit geöffnet oder geschlossen werden sollen. Zur Auswahl der zu öffnenden oder schließenden Ventile 16 wird zunächst in Schritt 52 der Ist-Wert der Raumtemperatur oder der Ist-Wert des Wärmeverbrauchers 14 gemessen, welcher zum Vergleich mit dem Soll-Wert der Raumtemperatur und/oder mit dem Soll-Wert des Wärmeverbrauchers 14 verwendet wird. Beispielsweise können hierfür Sensoren vorgesehen sein, die an die Ventile 16 angebracht sind, oder sich im Raum befinden, deren Daten an die Regel- und/oder Steuereinheit 20 gesendet werden.

In Schritt 54 werden die zu öffnenden oder schließenden Ventile 16 ausgewählt. Die Auswahl richtet sich unter anderem danach, ob das Puffervolumen zur Abgabe oder Aufnahme von Wärme benötigt wird.

Wird das Puffervolumen zur Abgabe von Wärme des Wärmeerzeugers 12 benötigt, beispielsweise während eines Abtauvorgangs einer Luft-Wasser-Wärmepumpe, wird vorzugsweise ein Ventil 16 gewählt, welches eine Schaltschwelle zum Öffnen oder Schließen noch nicht erreicht hat. Das Ventil 16 wird dann geöffnet.

Wird das Puffervolumen zur Aufnahme von Wärme des Wärmeerzeugers 12 benötigt, so wird ein Ventil 16 wie oben beschrieben entsprechend ausgewählt, das heißt, es hat eine Schaltschwelle zum Öffnen oder Schließen noch nicht erreicht.

In Schritt 56 wird das ausgewählte Ventil 16 gespeichert. Ebenfalls wird berechnet und gespeichert, wie groß die Durchflussöffnung des ausgewählten Ventils 16 sein soll, damit der Wert für den Volumenstrom oder das Puffervolumen, der Wert für die Laufzeit und/oder die Wärmeabgabe erreicht und/oder eingehalten werden kann.

Die Schritte 52, 54, 56 werden für alle Ventile 16 durchgeführt.

Anschließend wird in Schritt 58 ein Signal an die ausgewählten Ventile 16 gesendet, woraufhin die Ventile 16 ganz oder teilweise geöffnet oder geschlossen werden.

In Schritt 60 wird überprüft, ob die Wertvorgabe erreicht worden ist. Ist dem so, so wird in einem Schritt 62 die Einzelraumregelung für die Ventile 16 gestartet. Wurde die Wertvorgabe nicht erreicht, so startet das Verfahren bei Schritt 52 von neuem.

In den folgenden Ausführungsbeispielen werden Details des Verfahrens anhand seines prinzipiellen Ablaufs, wie in Figur 5 dargestellt, beschrieben, wobei jeweils davon ausgegangen wird, dass in Schritt 50 ein Wert für den Volumenstrom, insbesondere für den Mindestvolumenstrom, ein Wert für die Laufzeit des Wärmeerzeugers 12, insbesondere eine Mindestlaufzeit und/oder ein Wert für die Wärmeabgabe des Wärmeerzeugers 12 und ein Wert für das Puffervolumen vorgegeben werden.

Wird kein Wert vorgegeben, das heißt, werden keine Anforderungen an die Heizungsanlage 10 gestellt, so werden die Ventile 16 gemäß einer üblichen Einzelraumregelung geregelt und/oder gesteuert, so dass eine vorgegebene Raumsollwerttemperatur erreicht und eingehalten wird.

Weist die Heizungsanlage 10 wie im dritten Ausführungsbeispiel (Figur 4) einen Volumenstromsensor 18 auf, so wird dieser verwendet, um den in Schritt 50 vorgegeben Wert für den Volumenstrom, insbesondere den Mindestvolumenstrom, einzuhalten. Hierfür misst der Volumenstromsensor 18 den Ist-Volumenstrom und sendet den gemessenen Wert an die Steuer- und/oder Regeleinheit 20. Stimmen der Ist-Volumenstrom und der vorgegebene Volumenstrom unter Beachtung einer Hysterese nicht überein, so wird die Auswahl des oder der zu öffnenden Ventile 16 gestartet, um den Ist-Volumenstrom zu erhöhen oder zu drosseln, so dass der vorgegebene Volumenstrom erreicht wird.

Hierfür wird wie in Schritt 52 zunächst der Ist-Wert der Raumtemperatur gemessen.

In Schritt 54 wird ein Ventil 16 ausgewählt, und zwar vorzugsweise eines, bei dem der gemessene Ist-Wert die Raumsollwerttemperatur leicht unterschreitet, das Ventil 16 aber noch immer geschlossen ist, da es die untere Schaltschwelle zum Öffnen noch nicht erreicht hat. Alternativ wird ein Ventil 16 ausgewählt, bei welchem der Ist-Wert die Raumsolltemperatur leicht überschreitet, wobei das Ventil 16 immer noch geschlossen ist.

In Schritt 56 wird das ausgewählte Ventil 16 intern abgespeichert und auch, wie weit es geöffnet werden soll.

Nachdem alle Ventile 16 ausgewählt wurden, wird in Schritt 58 ein Signal an die betroffenen Ventile 16 gesendet, woraufhin diese ganz oder teilweise öffnen.

Anschließend wird in Schritt 60 überprüft, ob der vorgegebene Wert für den Volumenstrom erreicht wurde oder nicht. Wurde dieser erreicht, so wird die Einzelraumregelung für die Ventile 16 gestartet. Wurde er nicht erreicht, so startet das Verfahren wieder bei Schritt 52.

Ist kein Volumenstromsensor 18 vorhanden, so wird auf die wie in Schritt 50 eingegebenen Parameterwerte und Informationen über die Heizungsanlage 10 zurückgegriffen, um zu bestimmen, welche Ventile 16 geöffnet oder geschlossen werden sollen und ob der gewünschte Wert für den Volumenstrom erreicht wurde. In diesem Fall entspricht der gemessene Ist-Volumenstrom dem vorgegebenen Volumenstrom, und das Verfahren läuft wie oben beschrieben.

Analog zum obigen Ausführungsbeispiel wird verfahren, wenn ein Wert für das Puffervolumen vorgegeben wird. Anhand der eingegebenen Parameter und Daten werden die zu öffnenden oder schließenden Ventile 16 ausgewählt, wie in Schritt 54. Wird beispielsweise ein Puffervolumen von 50 Liter vorgegeben und befinden sich in der Heizungsanlage 10 mehr als fünf Wärmeverbraucher 12 mit einem jeweiligen Volumen von zehn Litern, so werden anhand dieser Informationen fünf Ventile 16 ausgewählt, die geöffnet werden.

Wird das Puffervolumen zur Abführung von Wärme vom Wärmeerzeuger 12 benötigt, so wird vorzugsweise ein Ventil 16 ausgewählt, bei dem der Ist-Sollwert der Raumsolltemperatur die Raumsolltemperatur leicht unterschreitet, das Ventil 16 aber noch geschlossen ist, da es die Schaltschwelle zum Öffnen noch nicht erreicht hat. Alternativ wird ein Ventil 16 ausgewählt, bei dem der Ist-Sollwert die Raumsollwerttemperatur nur leicht überschreitet.

Wird das Puffervolumen zur Zuführung von Wärme zum Wärmeerzeuger 12 benötigt, beispielsweise im Falle einer Wärmepumpe, so wird vorzugsweise ein Ventil 16 ausgewählt, bei dem der Ist-Sollwert die Raumsolltemperatur erreicht hat oder fast erreicht hat.

Wird eine Laufzeit, insbesondere eine Mindestlaufzeit, vorgegeben, so bleibt eine gewisse Anzahl an Ventilen 16 so lange ganz oder teilweise geöffnet, bis die Laufzeit erreicht wurde. Oft wird hierzu auch ein Volumenstrom oder ein Puffervolumen benötigt. Dies wird dann wie oben beschrieben geregelt.

Werden mehrere Werte auf einmal vorgegeben, so werden die Ventile 16 so geregelt und/oder gesteuert, dass die Bedingung mit der höchsten Anforderung bedient wird. Wäre es beispielsweise erforderlich, dass zur Einhaltung einer Laufzeit vier Ventile 16 geöffnet werden müssten und zur Einhaltung eines Volumenstroms fünf Ventile 16, so würden fünf Ventile geöffnet werden.

## Patentansprüche

1. Verfahren zum Betreiben einer pufferspeicherlosen Heizungsanlage (10) mit mindestens einem Wärmeerzeuger (12), mindestens einem Wärmeverbraucher (14) und mindestens einem Ventil (16), die miteinander verbunden sind und miteinander kommunizieren und die von einem Fluid durchströmt werden, wobei das Fluid als Puffervolumen dient, wobei durch die Ansteuerung des Ventils (16) das Puffervolumen geregelt und/oder gesteuert wird, **dadurch gekennzeichnet, dass** das Puffervolumen vorgegeben wird, wobei zu jeder Puffervolumenanforderung ein bestimmter Volumenstrom und/oder eine Laufzeit benötigt und berechnet werden/wird oder anderweitig vorgegeben werden/wird, wobei in Abhängigkeit des Volumenstroms und/oder der Laufzeit eine Größe einer Durchflussöffnung des Ventils (16) bestimmt wird, wobei für eine Einhaltung eines Mindestvolumenstroms berechnet wird, wie groß eine Durchflussöffnung des Ventils (16) sein muss, damit der Mindestvolumenstrom zirkulieren kann, wobei ein Wert für den Mindestvolumenstrom und ein Wert für das Puffervolumen vorgegeben werden/wird, wobei in einem Schritt überprüft wird, ob eine Wertvorgabe erreicht worden ist, wobei nach einem Erreichen der Wertvorgabe in einem Schritt eine Einzelraumregelung für die Ventile (16) gestartet wird.

2. Verfahren nach Anspruch 1, **dadurch gekennzeichnet, dass** bei einer zusätzlich eingespeisten Wärmemenge das mindestens eine Ventil (16) zur Vergrößerung des geregelten Puffervolumens zumindest teilweise soweit geöffnet wird, bis das zusätzlich benötigte Puffervolumen bereitgestellt ist.

3. Verfahren nach Anspruch 1 oder 2, **dadurch gekennzeichnet, dass** bei einer Drosselung der einzuspeisenden Wärmemenge das mindestens eine Ventil (16) zur Verkleinerung des geregelten Puffervolumens zumindest teilweise soweit geschlossen wird, bis das tatsächlich benötigte Puffervolumen bzw. dessen Wärmekapazität eingestellt ist.

4. Verfahren nach einem der vorhergehenden Ansprüche, **dadurch gekennzeichnet, dass** mehrere Ventile (16) zur Einstellung des Puffervolumens herangezogen werden, wobei jedes Ventil (16) einen aktuellen Ansteuergrad aufweist, und dass zumindest das Ventil (16) angesteuert wird, dessen aktueller Ansteuergrad sich nahe einer Schaltschwelle zum Öffnen oder Schließen befindet.

5. Verfahren nach einem der vorhergehenden Ansprüche, **dadurch gekennzeichnet, dass** mehrere Ventile (16) zur Einstellung des Puffervolumens herangezogen werden, wobei jedes Ventil (16) ein bestimmtes Puffervolumen mit einer bestimmten Größe steuert oder regelt, und dass zumindest das Ventil (16) angesteuert wird, dessen Puffervolumen als Zusatz oder Verminderung benötigt wird.

6. Verfahren nach einem der vorhergehenden Ansprüche, **dadurch gekennzeichnet, dass** das zusätzlich benötigte Puffervolumen berechnet wird aus einer zusätzlich bereitgestellten Wärmemenge und der maximal gewünschten oder erlaubten Temperaturerhöhung beim Wärmeverbraucher (14).

7. Verfahren nach einem der vorhergehenden Ansprüche, **dadurch gekennzeichnet, dass** das zu vermindernde Puffervolumen berechnet wird aus einer verminderten Wärmemenge und der maximal gewünschten oder erlaubten Temperaturerniedrigung beim Wärmeverbraucher (14).

8. Verfahren nach einem der vorhergehenden Ansprüche, **dadurch gekennzeichnet, dass** ein Messsignal eines Volumenstromsensors (18) zur Berechnung der Puffervolumina herangezogen wird.

9. Verfahren nach einem der vorhergehenden Ansprüche, **dadurch gekennzeichnet, dass** über die im Puffervolumen enthaltene Wärmemenge der Wärmeerzeuger (12) beeinflusst, insbesondere eine Wärmepumpe abgetaut wird.

10. Pufferspeicherlose Heizungsanlage (10) mit mindestens einem Wärmeerzeuger (12), mindestens einem Wärmeverbraucher (14) und mindestens einem Ventil (16), die miteinander verbunden sind und miteinander kommunizieren und die von einem Fluid durchströmt werden, wobei das Fluid als Puffervolumen dient, wobei durch die Ansteuerung des mindestens einen Ventils (16) nach einem Verfahren nach einem der vorhergehenden Ansprüche das Puffervolumen regelbar und/oder steuerbar ist, wobei es sich bei dem Wärmeerzeuger (12) um eine Wärmepumpe der Heizungsanlage (10) handelt, wobei über eine im Puffervolumen enthaltene Wärmemenge die Wärmepumpe abgetaut wird.

11. Pufferspeicherlose Heizungsanlage (10) nach Anspruch 10, **dadurch gekennzeichnet, dass** die Heizungsanlage (10) einen Volumenstromsensor (18) aufweist, der mit dem Wärmeerzeuger (12), mit dem Wärmeverbraucher (14) und/oder mit mindestens dem einen Ventil (16) verbunden ist, und dass diese miteinander kommunizieren.

12. Regel- und/oder Steuereinheit in einer Heizungsanlage (10), insbesondere für eine Heizungsanlage nach einem der Ansprüche 10 oder 11, **dadurch gekennzeichnet, dass** sie mit einem Verfahren nach einem der vorhergehenden Ansprüche 1 bis 9 zur Regelung und/oder Steuerung des Puffervolumens durch das Ventil (16) in der Regel-und/oder Steuereinheit (20) betreibbar ist.

## Claims

1. Method for operating a heating installation (10) without a buffer store, having at least one heat generator (12) and at least one heat consumer (14) and at least one valve (16), which are connected to one another and communicate with one another and through which a fluid flows, wherein the fluid serves as a buffer volume, wherein the buffer volume is regulated and/or controlled by way of the actuation of the valve (16), **characterized in that** the buffer volume is predefined, wherein a certain volume flow and/or a running time are/is required and are/is calculated or are/is otherwise predetermined for each buffer volume requirement, wherein a size of a throughflow opening of the valve (16) is determined in dependence on the volume flow and/or on the running time, wherein, for maintaining a minimum volume flow, the calculation is carried out as to how large a throughflow opening of the valve (16) has to be in order for the minimum volume flow to be able to circulate, wherein a value for the minimum volume flow and a value for the buffer volume are/is predefined, wherein a check is made in one step as to whether a value specification has been reached, wherein individual room regulation for the valves (16) is started in one step after the value specification has been reached.

2. Method according to Claim 1, **characterized in that**, when a quantity of heat is additionally fed in, in order to increase the regulated buffer volume, the at least one valve (16) is at least partly opened until the additionally required buffer volume is provided.

3. Method according to Claim 1 or 2, **characterized in that**, when the quantity of heat to be fed in is restricted, in order to reduce the regulated buffer volume, the at least one valve (16) is at least partly closed until the actually required buffer volume or the heat capacity thereof is set.

4. Method according to one of the preceding claims, **characterized in that** multiple valves (16) are used for setting the buffer volume, wherein each valve (16) has a current actuation level, and **in that** at least the valve (16) whose current actuation level is close to a switching threshold for opening or closing is actuated.

5. Method according to one of the preceding claims, **characterized in that** multiple valves (16) are used for setting the buffer volume, wherein each valve (16) controls or regulates a certain buffer volume with a certain size, and **in that** at least the valve (16) whose buffer volume is required as an addition or reduction is actuated.

6. Method according to one of the preceding claims, **characterized in that** the additionally required buffer volume is calculated from an additionally provided quantity of heat and the maximum required or permitted temperature rise at the heat consumer (14).

7. Method according to one of the preceding claims, **characterized in that** the buffer volume to be reduced is calculated from a reduced quantity of heat and the maximum desired or permitted temperature drop at the heat consumer (14).

8. Method according to one of the preceding claims, **characterized in that** a measurement signal of a volume flow sensor (18) is used for calculating the buffer volumes.

9. Method according to one of the preceding claims, **characterized in that** the heat generator (12) is influenced, in particular a heat pump is defrosted, via the quantity of heat contained in the buffer volume.

10. Heating installation (10) without a buffer store, having at least one heat generator (12) and at least one heat consumer (14) and at least one valve (16), which are connected to one another and communicate with one another and through which a fluid flows, wherein the fluid serves as a buffer volume, wherein the buffer volume is able to be regulated and/or controlled by way of the actuation of the at least one valve (16) according to a method according to one of the preceding claims, wherein the heat generator (12) is a heat pump of the heating installation (10), wherein the heat pump is defrosted via a quantity of heat contained in the buffer volume.

11. Heating installation (10) without a buffer store according to Claim 10, **characterized in that** the heating installation (10) has a volume flow sensor (18) which is connected to the heat generator (12), to the heat consumer (14) and/or to at least the one valve (16), and **in that** these communicate with one another.

12. Regulating and/or control unit in a heating installation (10), in particular for a heating installation according to either of Claims 10 and 11, **characterized in that** said installation is able to be operated using a method according to one of the preceding Claims 1 to 9, for regulating and/or controlling the buffer volume by way of the valve (16), in the regulating and/or control unit (20).

## Revendications

1. Procédé de conduite d'une installation de chauffage sans ballon tampon (10) avec au moins un générateur de chaleur (12), au moins un consommateur de chaleur (14) et au moins une soupape (16), qui sont reliés l'un à l'autre et communiquent l'un avec l'autre et qui sont parcourus par un fluide, dans lequel le fluide fait office de volume tampon, dans lequel le volume tampon est régulé et/ou commandé par la commande de la soupape (16), **caractérisé en ce que** le volume tampon est prédéterminé, dans lequel un flux volumétrique déterminé et/ou une durée est/sont nécessaire(s) et/ou calculé(s) à chaque demande de volume tampon ou est/sont prédéterminé(s) d'une autre manière, dans lequel on détermine une grandeur d'une ouverture de passage de la soupape (16) en fonction du flux volumétrique et/ou de la durée, dans lequel on calcule, pour le respect d'un flux volumétrique minimal, quelle doit être la grandeur de l'ouverture de passage de la soupape (16), pour que le flux volumétrique minimal puisse circuler, dans lequel une valeur pour le flux volumétrique minimal et une valeur pour le volume tampon est/sont prédéterminée(s), dans lequel on vérifie dans une étape si une prescription de valeur a été atteinte, dans lequel après avoir atteint la prescription de valeur on démarre dans une étape une régulation de local individuel pour les soupapes (16).

2. Procédé selon la revendication 1, **caractérisé en ce que**, dans le cas d'une quantité de chaleur accumulée en plus, on ouvre au moins partiellement ladite au moins une soupape (16) pour l'augmentation du volume tampon régulé, jusqu'à ce que le volume tampon nécessaire en supplément soit disponible.

3. Procédé selon la revendication 1 ou 2, **caractérisé en ce que**, en cas de réduction de la quantité de chaleur à accumuler, on ferme au moins partiellement ladite au moins une soupape (16) pour diminuer le volume tampon régulé, jusqu'à ce que le volume tampon effectivement nécessaire ou sa capacité calorifique soit réglé(e).

4. Procédé selon l'une quelconque des revendications précédentes, **caractérisé en ce que** l'on utilise plusieurs soupapes (16) pour le réglage du volume tampon, dans lequel chaque soupape (16) présente un degré de commande actuel, et **en ce que** l'on commande au moins la soupape (16), dont le degré de commande actuel se trouve proche d'un seuil de commutation pour l'ouverture ou la fermeture.

5. Procédé selon l'une quelconque des revendications précédentes, **caractérisé en ce que** l'on utilise plusieurs soupapes (16) pour le réglage du volume tampon, dans lequel chaque soupape (16) commande ou régule un volume tampon déterminé présentant une grandeur déterminée, et **en ce que** l'on commande au moins la soupape (16), dont le volume tampon est nécessaire pour le supplément ou la diminution.

6. Procédé selon l'une quelconque des revendications précédentes, **caractérisé en ce que** l'on calcule le volume tampon nécessaire en supplément à partir d'une quantité de chaleur disponible en plus et de l'augmentation de température maximale désirée ou autorisée au niveau du consommateur de chaleur (14).

7. Procédé selon l'une quelconque des revendications précédentes, **caractérisé en ce que** l'on calcule le volume tampon à diminuer à partir d'une quantité de chaleur réduite et de la diminution de température maximale désirée ou autorisée au niveau du consommateur de chaleur (14).

8. Procédé selon l'une quelconque des revendications précédentes, **caractérisé en ce que** l'on utilise un signal de mesure d'un détecteur de flux volumétrique (18) pour le calcul des volumes tampons.

9. Procédé selon l'une quelconque des revendications précédentes, **caractérisé en ce que** le générateur de chaleur (12) est influencé, en particulier une pompe à chaleur est dégivrée, au moyen de la quantité de chaleur contenue dans le volume tampon.

10. Installation de chauffage sans ballon tampon (10) avec au moins un générateur de chaleur (12), au moins un consommateur de chaleur (14) et au moins une soupape (16), qui sont reliés l'un à l'autre et communiquent l'un avec l'autre et qui sont parcourus par un fluide, dans lequel le fluide fait office de volume tampon, dans lequel le volume tampon peut être régulé et/ou commandé par la commande de ladite au moins une soupape (16) suivant un procédé selon l'une quelconque des revendications précédentes, dans lequel le générateur de chaleur (12) est une pompe à chaleur de l'installation de chauffage (10), dans lequel la pompe à chaleur est dégivrée au moyen d'une quantité de chaleur contenue dans le volume tampon.

11. Installation de chauffage sans ballon tampon (10) selon la revendication 10, **caractérisée en ce que** l'installation de chauffage (10) présente un détecteur de flux volumétrique (18), qui est relié au générateur de chaleur (12), au consommateur de chaleur (14) et/ou à ladite au moins une soupape (16), et **en ce que** ceux-ci communiquent l'un avec l'autre.

12. Unité de régulation et/ou de commande dans une installation de chauffage (10), en particulier pour une installation de chauffage selon une des revendications 10 ou 11, **caractérisée en ce qu'**elle peut fonctionner avec un procédé selon l'une quelconque des revendications précédentes 1 à 9 pour la régulation et/ou la commande du volume tampon au moyen de la soupape (16) dans l'unité de régulation et/ou de commande (20).
